# EUROPEAN PATENT APPLICATION

(11) **EP 1 764 731 A1**
(43) Date of publication of application: **21.03.2007**
(21) Application number: 05755716.7
(22) Date of filing: 28.06.2005
(51) Int. Cl.: G06Q 10/00

(54) **COMMUNICATION TYPE INFORMATION DISTRIBUTION SYSTEM, INFORMATION DISTRIBUTION SERVER, AND PROGRAM**

(30) Priority: 29.06.2004 JP 2004191811
(71) Applicant: Navitime Japan Co., Ltd., Tokyo 101-0051 (JP)
(72) Inventor: Shinohara, Takehiro, Navitime Japan Co., Ltd., Chiyoda-ku, Tokyo, 1010051 (JP); Onishi, Keisuke, Navitime Japan Co., Ltd., Chiyoda-ku, Tokyo, 1010051 (JP)
(74) Representative: HOFFMANN EITLE
(86) International application number: PCT/JP2005/011779
(87) International publication number: WO 2006/001435

(57) **Abstract**

There are provided a communication type information distribution system, an information distribution server, and a program capable of assuring profitability considering the cost required for creating a content to be provided to a mobile terminal and protecting the copyright. The information distribution server (40) provides a content menu to the mobile terminal (20) and links to a content server (50) by referencing the content link destination database according to the content specification from the mobile terminal (20). The content server (50) requests a charging server (60) to perform settlement processing, obtains settlement approval, and distributes download information to the information distribution server.

## Description

### [Field of the Invention]

The present invention relates to a communication type information distribution system, communication type navigation system, information distribution server, and program. More particularly, the invention relates to a communication type information distribution system, information distribution server, and program so structured that when desired content such as audio data is downloaded for utilization to a mobile telephone or other portable terminal, protection of the copyright of such content can be effected with ease, while the user can download the desired content to the mobile terminal via a simple method.

### [Related Art]

With the development of telecommunications and information processing technology in recent years, what are termed communication type information distribution services, whereby a mobile telephone or other mobile terminal connects via a network such as the Internet to an information distribution server and receives services such as transmission of desired data and information distribution, from the information distribution server, are now utilized in various fields. For instance, widespread use is now made of email services for mobile telephones, and of download services whereby computer programs (application programs), audio, visuals and other content are downloaded from the information distribution server for utilization to a mobile telephone. Besides those, there have been realized services whereby products are bought and sold over the Internet, as well as Internet banking services and so forth.

An example of a content download service is what is known as "Chaku-uta" (registered trademark), whereby, when a mobile telephone receives a call signal, music or a song by a favorite artist of the user pre-downloaded to the mobile telephone is played back in place of the ringtone (beep).

As a variant of such communication type information distribution services, there have also been realized communication type navigation systems that utilize mobile telephones. Examples are the communication type navigation systems disclosed in JP-2003-214860-A and JP-2001-298765-A below which make use of a mobile telephone and an information distribution server.

The navigation system disclosed in JP-2003-214860-A includes, as shown in Fig. 7, a mobile terminal (mobile telephone) 1 and a data communication service center (information distribution computer system) 3 each of which is connected to a mobile communication network 2. The mobile terminal 1 coupled to the data communication service center 3 receives desired data communication services. If the mobile terminal 1 is a mobile telephone or personal handyphone system (PHS), a telephone call with a desired other party (e.g., a fixed-line telephone, mobile telephone, PHS) through the mobile communication network 2 is made via a mobile communication station over telephone lines. The data communication service center 3 has such a configuration mentioned below that it can provide route navigation services upon a request from the mobile terminal 1.

Upon receiving a route search request including starting-point and destination information from the mobile terminal 1 in the navigation system, the information distribution computer system of the data communication service center 3 searches for an optimal route from the starting point to the destination out of roadway data stored in its storage means and temporally stores the searched route data as guidance route data in the storage means.

Upon receiving a display-map information request specifying a position coordinate and guidance route, the information distribution computer system of the data communication service center 3 reads out, from its storage means, map data for a vector map display of and around the specified position coordinate and data of the specified guidance route. Then the system converts the guidance route data into vector data so as to show the data as roadways in a specific color, incorporates the converted data into the map data, and sends the data to the mobile terminal 1 that sent the request.

Although not shown, the mobile terminal 1 includes a global positioning system (GPS) receiver to locate its current position as it is moved, and the terminal performs GPS measurements at regular intervals. Once there is a lack of display map information, as a result of the GPS measurements, the mobile terminal 1 sends a display-map information request to the information distribution computer system of the data communication service center 3. The storage means included in the information distribution computer system of the data communication service center 3 stores roadway data (map data) and other data such as buildings and other landmarks, intersection names, and street names. The data here is updated by downloading the latest data from information distribution computer systems 5, 6 that distribute map data over the Internet 4.

A route search method using this type of communication navigation system and information distribution server is disclosed in JP-2001-165681-A. In this navigation system, when a mobile navigation terminal sends starting-point and destination information to an information distribution server, the server searches for and guides a route that satisfies search requirements out of roadway and traffic data. A route is searched under a specific condition of transportation from the starting point to the destination (e.g., walking, automobile, combined waling-plus-transport mode).

A route search method using this type of communication navigation system and information distribution server is disclosed in JP-2001-165681-A. In this navigation system, when a mobile navigation terminal sends starting-point and destination information to an information distribution server, the server searches for and guides a route that satisfies search requirements out of roadway and traffic data. A route is searched under a specific condition of transportation from the starting point to the destination (e.g., walking, automobile, combined waling-plus-transport mode).

With the above-mentioned type of navigation system, another system has been developed to provide audio data for guidance, such as "Turn right 100 m ahead." An example of such a navigation system to provide audio guidance is disclosed in JP-2003-177029-A.
[Patent Document 1]
   JP-2003-214860-A (Fig. 1)
[Patent Document 2]
   JP-2001-298765-A (Fig. 19)
[Patent Document 3]
   JP-2001-165681-A (Figs. 2 through 9)
[Patent Document 4]
   JP-2003-177029-A (Fig. 1)

### [Disclosure of the Invention]

### [Problems to be Solved]

When content is downloaded from an information distribution server to a mobile terminal for utilization, payment of a copyright fee to the content's creator is most often required, for reasons of copyright. Where the content is an application program and is downloaded to the user for a fee, it is possible, by inserting into the program itself a processing procedure that restricts copying, to impose use restrictions such that the user receiving the download is restricted from copying without paying the proper fee.

By contrast, with the aforementioned "Chaku-uta" (registered trademark) download service, the system is such that a fee is charged for each download of a track to a mobile telephone. However, once downloaded to a mobile telephone, content such as that of "Chaku-uta" (registered trademark) can be used without restriction, and thus has the inherent problem that its handling of protection of copyright is still inadequate.

With "audio guidance" such as featured in the communication type navigation system disclosed in JP-2003-177029-A, many requests ask for provision of audio guidance in the voices of users' favorite artists and celebrities or in various languages other than Japanese. In such cases it is necessary to create audio data specifically for audio guidance alone; since that entails outlay, the cost of providing audio guidance data is rather high, and to make it work as a business requires ingenuity to recoup costs.

There exists also the problem that even greater care is needed with regard to the copyrights of the celebrities and artists employed in order to create the audio data. Moreover, audio data will often have differing copyright holders in each case, and the destinations to which the audio data is downloaded and the methods of charging the fees will also often differ, so that a system is needed that can cope flexibly.

The present inventors arrived at the present invention, in view of the aforesaid problems, that by attaching a validity period to the audio data or other content to be downloaded to a mobile terminal, and rendering it impossible to play the data back when the validity period has expired following downloading, makes it possible to provide the service while assuring profitability and is also advantageous for protecting copyright.

More precisely, in consideration of the aforementioned problems and the expense of creating content to be provided to a mobile terminal, the invention has the advantage of providing a communication type information distribution system, information distribution server, and program that are advantageous for copyright protection while assuring profitability, its first advantage being to permit the imposition of use expiration periods even where downloads are of content data only.

The invention also provides a communication type information distribution system, information distribution server, and program that enable desired content to be downloaded with ease via a mobile terminal. Furthermore, its second advantage is to provide a system whereby content data is provided from a copyright holder's server, the copyright holder's charging system can be used, and the system as a whole realizes an operability that gives the user a sense of unity.

### [Means to Solve the Problems]

According to claim 1 of the present invention, a communication type information distribution system which rewrites selectively used content at a mobile terminal includes: an information distribution server that provides a content menu; at least one content server that provides content data including a use period during which utilization of the content is allowed; and a charging server that carries out settlement processing with regard to a request for downloading of content data. The information distribution server includes a content menu processing unit that provides content menus to a mobile terminal, a download control unit, and a content link destination database (DB), and links the mobile terminal to the content server by referencing the content link destination DB in accordance with a content specification from the mobile terminal. The content server includes a charging processing unit that requests settlement processing from the charging server with regard to a request for downloading of the specified content, and distributes download information to the information distribution server in accordance with settlement approval from the charging server. The information distribution server includes a download control unit that links the mobile terminal to the download URL of the content server to enable the specified content data to be downloaded. The mobile terminal applies to the downloaded content data a time stamp based on a system clock and controls a period for utilization by comparing the system clock's current time and the time stamp.

According to claim 2 of the present invention, in the communication type information distribution system of claim 1, any two out of the information distribution server, content server and charging server are configured as an integrated server.

According to claim 3 of the present invention, in the communication type information distribution system of claim 1 or claim 2, the mobile terminal possesses a GPS processing unit and a navigation request unit, and the information distribution server also possesses a map DB and a route search unit and distributes map data together with data on a guidance route found via the route search unit in response to a navigation request from the mobile terminal.

According to claim 4 of the present invention, in the communication type information distribution system of claim 1 or claim 2, the mobile terminal possesses a GPS processing unit and a navigation request unit, the information distribution server also possesses a map DB and a route search unit and distributes map data together with data on a guidance route found via the route search unit in response to a navigation request from the mobile terminal, and the content data is audio data for guiding along the guidance route.

According to claim 5 of the present invention, an information distribution server is a component of a communication type information distribution system which rewrites selectively used content at a mobile terminal and which includes: the information distribution server that provides a content menu; at least one content server that provides content data including a use period during which utilization of the content is allowed; and a charging server that carries out charging processing with regard to a request for downloading of content data. The information distribution server possesses a content menu processing unit that provides a content menu to a mobile terminal; a content link destination DB; and a download control unit that links the mobile terminal to the download URL of the content server to enable the specified content data to be downloaded; links the mobile terminal to the content server by referencing the content link destination DB in accordance with the content specification from the mobile terminal; and links the mobile terminal, by means of the download control unit, to the download URL of the content server to enable the specified content data to be downloaded.

According to claim 6 of the present invention, the information distribution server of claim 5 is a component of a communication type information distribution system which rewrites selectively used content at a mobile terminal possessing a GPS processing unit and a navigation request unit and which includes: an information distribution server that provides a content menu; at least one content server that provides content data including a use period during which utilization of the content is allowed; and a charging server that carries out charging processing with regard to a request for downloading of content data.

The information distribution server possesses a map DB and a route search unit and distributes map data together with data on a guidance route found via the route search unit in response to a navigation request from the mobile terminal.

According to claim 7 of the present invention, the information distribution server of claim 5 is a component of a communication type information distribution system which rewrites selectively used content at a mobile terminal possessing a GPS processing unit and a navigation request unit and which includes: the information distribution server that provides a content menu; at least one content server that provides content data including a use period during which utilization of the content is allowed; and a charging server that carries out charging processing with regard to a request for downloading of content data.

The information distribution server possesses a map DB and a route search unit and distributes map data together with data on a guidance route found via the route search unit in response to a navigation request from the mobile terminal; and the content data is audio data for guiding along the guidance route.

According to claim 8 of the present invention, in the information distribution server of any one of claims 5 to 7, the information distribution server is integrated with the content server and/or charging server.

According to claim 9 of the present invention, a program enables a computer constituting an information distribution server, said information distribution server being a component of a communication type information distribution system which comprises: said information distribution server that provides a content menu, at least one content server that provides content data including a use period during which utilization of a content is allowed, and a charging server that carries out charging processing with regard to a request for downloading of content data; and which rewrites a selectively used content at a mobile terminal; and said information distribution server including: a content menu processing unit that provides a content menu to said mobile terminal, a content link destination database (DB), and a download control unit that links said mobile terminal to a download URL of said content server to enable said specified content data to be downloaded; to execute the following processes: linking to a content server by referencing said content link destination DB in accordance with a content specification from said mobile terminal; and enabling, by means of said download control unit, specified content data to be downloaded from said content server to said mobile terminal.

According to claim 10 of the present invention, a program enables a computer constituting an information distribution server, said information distribution server being a component of a communication type information distribution system which comprises: said information distribution server that provides a content menu, at least one content server that provides content data including a use period during which utilization of a content is allowed, and a charging server that carries out charging processing with regard to a request for downloading of content data; and which rewrites a selectively used content at a mobile terminal possessing a global positioning system (GPS) processing unit and a navigation request unit; and said information distribution server including: a content menu processing unit that provides a content menu to said mobile terminal, a content link destination database (DB), a download control unit that links said mobile terminal to a download URL of said content server to enable said specified content data to be downloaded, a map database, and a route search unit; to execute the following processes: linking to a content server by referencing said content link destination DB in accordance with a content specification from said mobile terminal; enabling, by means of said download control unit, specified content data to be downloaded from said content server to said mobile terminal; searching for a route in response to a navigation request from said mobile terminal; and distributing map data together with data on a guidance route found via said route search unit.

### [Advantages of the Invention]

According to claim 1 of the present invention, by connecting to the information distribution server from the mobile terminal and selecting desired content from a content menu, links are established with the content server and charging server and the content concerned can be downloaded for a fee. The content includes a utilization period, and because the mobile terminal controls the utilization period by means of the system clock, utilization of the content is permitted for that period only, which is advantageous for recouping the content creation costs and for copyright protection with regard to the copyright holder.

According to claim 2 of the present invention, in addition to claim 1, any two out of the information distribution server, content server and charging server are configured as an integrated server, the information distribution server is accordingly able to carry out provision of content, or settlement processing for charging fees.

According to claim 3 of the present invention, in addition to claim 1 or 2, the mobile terminal is a terminal that receives navigation services and the information distribution server distributes route searches, guidance routes and map data to the mobile terminal, and therefore functions as a communication type navigation system. The user is accordingly able, by connecting the mobile terminal to the information distribution server and selecting desired content from a content menu, to link to the content server and charging server and to download the content concerned for a fee. The content includes a utilization period, and because the mobile terminal controls the utilization period by means of the system clock, utilization of the content is permitted for that period only, which is advantageous for recouping the content creation costs and for copyright protection with regard to the copyright holder.

According to claim 4 of the present invention, in the addition to claim 1 or 2, the mobile terminal is a terminal that receives navigation services, the information distribution server distributes route searches, guidance routes and map data to the mobile terminal, and the content is audio data for audio guidance, the user is consequently able, by connecting the mobile terminal to the information distribution server and selecting desired content from a content menu, to link to the content server and charging server and to download the content concerned for a fee. The content includes a utilization period, and because the mobile terminal controls the utilization period by means of the system clock, utilization of the content is permitted for that period only, which is advantageous for recouping the content creation costs and for copyright protection with regard to the copyright holder.

According to claim 5 of the present invention, an information distribution server can be provided in which, by connecting the mobile terminal to the information distribution server and selecting desired content from a content menu, links are established with the content server and charging server and the content concerned can be downloaded for a fee.

According to claim 6 of the present invention, an information distribution server can be provided that is a component of the communication type information distribution system of claim 3, in which the mobile terminal is a terminal that receives navigation services and the information distribution server distributes route searches, guidance routes and map data to the mobile terminal, and which therefore functions as a communication type navigation system.

According to claim 7 of the present invention, the mobile terminal is a terminal that receives navigation services, the information distribution server distributes route searches, guidance routes and map data to the mobile terminal, and the content is audio data for audio guidance; so that an information distribution server can be provided that is a component of the communication type information distribution system of claim 4.

According to claim 8 of the present invention, any two out of the information distribution server, content server and charging server are configured as an integrated server, and consequently an information distribution server can be provided that is able to carry out provision of content, or settlement processing for charging fees.

According to claim 9 of the present invention there can be provided a program that enables a computer constituting the information distribution server of claim 5 to execute processing that links to the content server by referencing the content link destination DB in accordance with the content specification from the mobile terminal, and processing that, by means of a download control unit, enables the specified content data to be downloaded from the content server to the mobile terminal.

According to claim 10 of the present invention, there can be provided a program that enables a computer constituting the information distribution server of claim 6 to execute processing that links to the content server by referencing the content link destination DB in accordance with the content specification from the mobile terminal, and processing that, by means of a download control unit, enables the specified content data to be downloaded from the content server to the mobile terminal.

### [Brief Description of the Drawings]

Fig. 1 is a system configuration diagram illustrating the configuration of a communication type information distribution system of one embodiment of the invention.
Fig. 2 is a block diagram illustrating the configuration of various equipment in a communication type information distribution system of the present embodiment of the invention.
Fig. 3 is a transition diagram illustrating the link transitions and data flows among the mobile terminal 20 and other equipment such as the information distribution server 40 in the communication type information distribution system 10 shown in Fig. 2.
Fig. 4 illustrates examples of content menu screens, Fig. 4A being an initial screen that presents sites which provide content, Fig. 4B being a detail screen showing the content list of a site selected on the initial screen, and Fig. 4C being a screen that presents the fee and content use license conditions, applicable if the selected content is downloaded.
Fig. 5 illustrates examples of download page screens provided by the information distribution server 40, Fig. 5A being an initial screen and Fig. 5B being a download screen that links to the download URL for the selected content.
Fig. 6 is a diagram illustrating the configuration of content stored in the content storage unit.

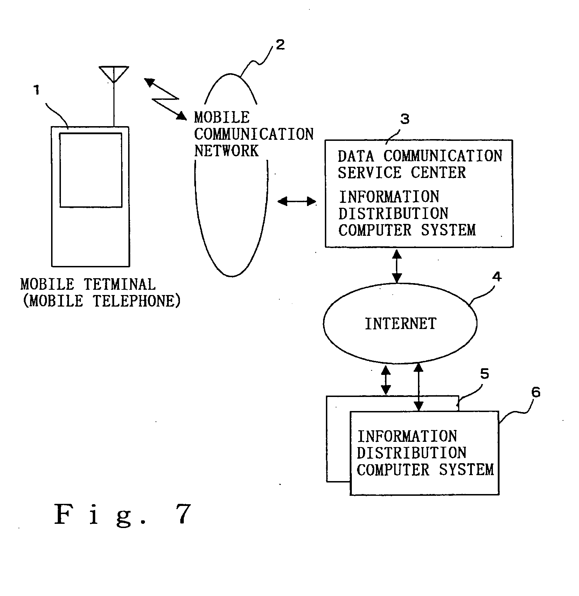

Fig. 7 is a diagram illustrating the configuration of a related art communication type navigation system.

### [Reference Numerals]

- 10: Communication type information distribution system
- 12: WAP network
- 14: Internet
- 20: Mobile terminal
- 30: Content server
- 40: Information distribution server
- 50: Content server
- 60: Charging server
- 21: Main control unit
- 22: Navigation request unit
- 23: Content request unit
- 24: Content storage unit
- 25: Map/route storage unit
- 26: GPS processing unit
- 41 1: Main control unit
- 42: Map DB
- 43: Transmission/reception unit
- 44: Route search unit
- 45: Content menu processing unit
- 47: Content link destination DB
- 48: Download control unit
- 51: Charging processing unit
- 61: Settlement processing unit

### [Description of the Preferred Embodiments]

A specific instance of embodiments of the invention will now be described using an embodiment and the drawings.

### [Embodiment]

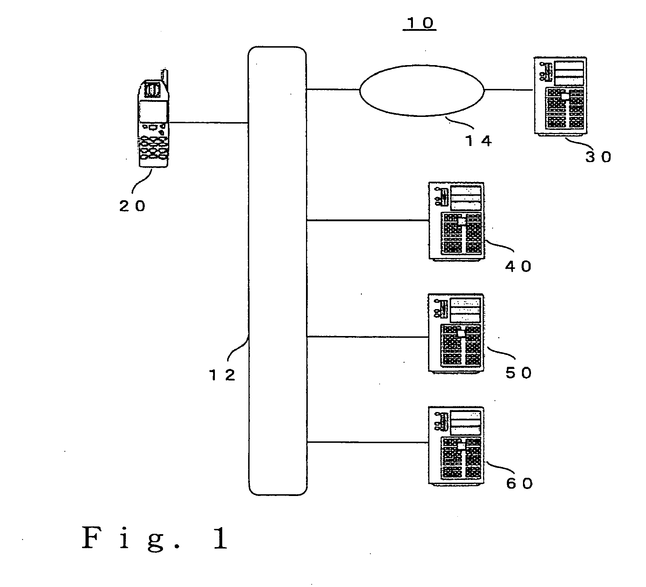

A communication type information distribution system 10 of one embodiment of the invention is composed primarily of a mobile terminal 20, such as a mobile telephone, and an information distribution server 40, as shown in Fig. 1. The communication type information distribution system 10 is a communication type information distribution system of the communication type navigation system variety disclosed in JP-2003-214860-A, JP-2001-298765-A, and JP-2001-165681-A. The structure is such that, for example, the mobile terminal 20 has a GPS processing unit and a navigation request unit, and the information distribution server 40 has a map database (DB) and a route search unit; the information distribution server 40 distributes map data together with data on guidance routes found via the route search unit to the mobile terminal in response to navigation requests from the mobile terminal 20.

The information distribution server 40 also provides audio guidance for guiding along guidance routes (data for audio and visuals is commonly termed "content") to the mobile terminal 20, so that the user can be guided along routes via audio guidance. For example, when the user is about to reach an intersection, pre-patterned audio data for guidance, such as "Turn right 100 m ahead", will be provided to the mobile terminal 20. Together with the data for the guidance route that the information distribution server 40 distributes to the mobile terminal 20, there are also distributed guide points such as intersections, and audio guidance patterns to be played back at such guide points. Upon reaching the guide point, the mobile terminal 20 plays back the audio data of the specified pattern for providing the user with guidance via audio.

Concerning audio guidance and the like content, many requests ask for provision of audio guidance in the voices of users' favorite artists or celebrities or in various languages other than Japanese, as mentioned earlier. In order to respond to such user requests, in addition to audio guidance data for standard provision, or data pre-installed in a content storage unit 24, there is also kept ready in the information distribution server 40 audio data for audio guidance in the voices of artists or celebrities frequently requested by users, and audio data for audio guidance in various languages other than Japanese. Further, it is preferable to make rewritable the audio data to be stored in the mobile terminal 20 when desired audio data is downloaded from the information distribution server 40 via user selection. In so doing it is necessary to give attention to the copyrights of the artists or celebrities whose audio data is provided, and to take account of recouping the costs of creating the audio data.

To those ends, in the communication type information distribution system of Fig. 1 there are installed a content server 50 or 30 that provides content data such as audio data, and a charging server 60 that performs settlement processing with regard to downloading and utilization of the content. The mobile terminal 20, information distribution server 40, content server 50 and charging server 60 are connected by means of a wireless application protocol (WAP) network 12, and via the WAP gateways, data communication is possible between the mobile terminal 20 and each of the servers in the array (information distribution server 40 through to charging server 60). Further, the charging server of the mobile telephone that is the mobile terminal is also connected by means of the WAP network 12. The charging server 60 can be the settlement server of a credit card company or the charging server for the mobile telephone. There is also connection to the Internet 14 through a WAP gateway, so that connection with other content servers 30 on the Internet is possible.

A validity period is attached to the content which then undergoes settlement processing by the charging server 60 and is downloaded for a fee; subsequently it will cease to be playable when the validity period expires. Thus the structure is such that the service can be provided while assuring profitability, and advantages for copyright protection are also produced.

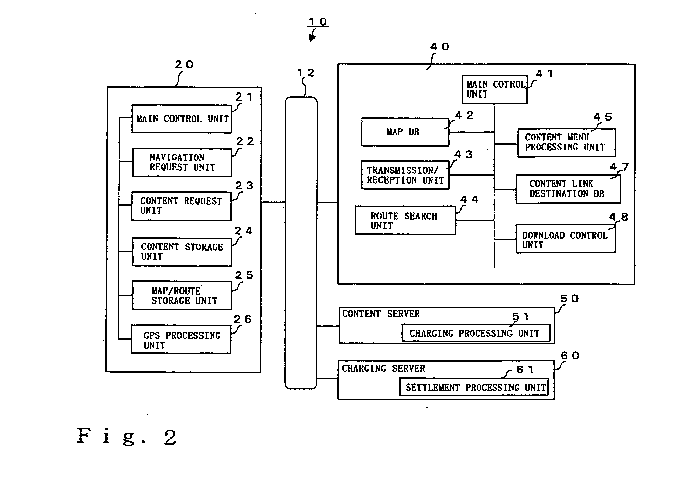

Fig. 2 is a block diagram illustrating the configuration of various equipment in the communication type information distribution system 10 of the present embodiment of the invention. The mobile terminal 20, which may be a mobile telephone, is composed of a main control unit 21 constituted of a microprocessor unit; a navigation request unit 22 that requests route guidance from the information distribution server 40; a content request unit 23 that requests content such as audio guidance; the content storage unit 24 that stores downloaded content; a map/route storage unit 25 that stores map data and guidance route data distributed from the information distribution server 40; and a GPS processing unit 26 that processes GPS satellite signals so as to fix the current position of the mobile terminal.

To receive navigation services, the user of the mobile terminal 20 inputs the starting place, destination, motion (walking, automobile, combined walking-plus-transport mode, etc) and other route search conditions via an operation unit not shown in the drawings, and sends a route search request to the information distribution server 40 through the navigation request unit 22. In accordance with the route search conditions received from the mobile terminal 20, the information distribution server 40 searches for the optimal guidance route and distributes map data together with route guidance data to the mobile terminal 20. The mobile terminal 20 repeatedly fixes the current position with the GPS processor, but if the need arises to distribute fresh map data due to the movements of the mobile terminal, the applicable map data is distributed.

Also, as previously mentioned, the mobile terminal 20 downloads in advance patterned audio data for guiding along guidance routes via audio, and plays back the audio guidance data in accordance with the guidance route data (including guide point data), being able in this way to receive guidance via audio. The content request unit 23 carries out processing to request downloading of audio data, and the downloaded data is stored in the content storage unit 26. In the server array (information distribution server 40, content server 50) there is kept ready, in addition to audio data for audio guidance that is standardly provided, also audio data for audio guidance in the voices of artists or celebrities frequently requested by users, and audio data for audio guidance in various languages other than Japanese. The user of the mobile terminal 20 is able to receive guidance in the desired voices by selecting and downloading desired audio data through the content request unit 23, and rewriting the audio data in the content storage unit 24.

The information distribution server 40 has: a main control unit 41 constituted of a microprocessor unit; a map DB 42, a transmission/reception unit 43; a route search unit 44; a content menu processing unit 45 that presents the user with menus of audio data (content) for audio guidance, allows the user to select content, and links to the locations of the content; a content link destination DB 47 for identifying the locations where content is kept; and a download control unit 48 for supporting content download processing.

The content server 50 has a charging processing unit 51 that requests settlement processing from the charging server with regard to requests for downloading of content specified (selected) by the mobile terminal 20, and on the basis of the settlement confirmation from the charging server, distributes download information to the information distribution server. Also, the charging server 60 has a settlement processing unit 61 that carries out settlement processing with regard to content to be downloaded by the mobile terminal 20. The charging server 60 can be a settlement server of a credit card company or the charging server for the mobile telephone.

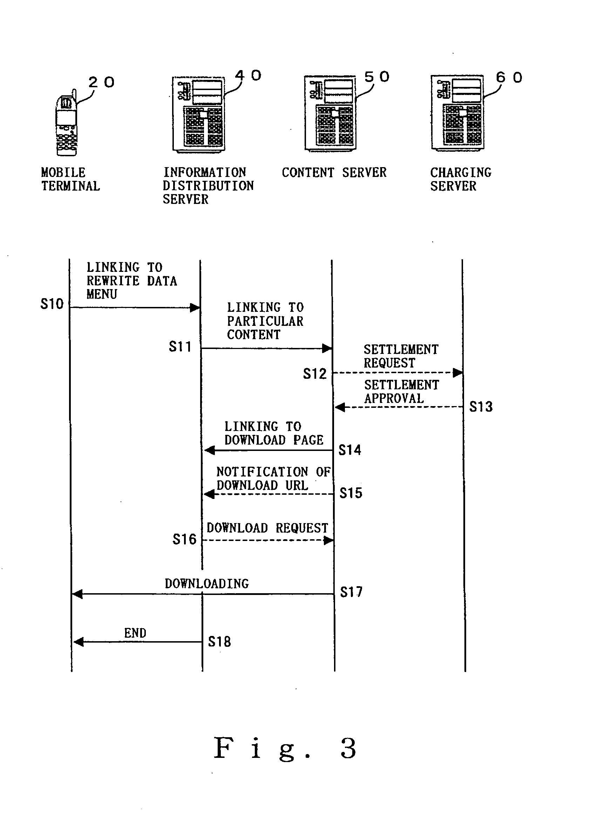

Fig. 3 is a transition diagram illustrating the link transitions and data flows among the mobile terminal 20 and the information distribution server 40, content server 50 and charging server 60 in the communication type information distribution system 10 shown in Fig. 2. As mentioned earlier, the information distribution server 40 is a server that provides navigation services, the content server 50 is a server that provides audio data (content) for audio guidance, and the charging server 60 is a settlement server of a credit card company or the like. The system is not limited to a single content server 50; other content servers 30 linkable via the Internet 14 may also provide content, as shown in the system configuration in Fig, 1. Moreover, the servers need not be distinct servers; the information distribution server 40 may possess the functions of the content server 50. The description below is of an embodiment in which the servers are distinct servers as in Figs. 1 and 2.

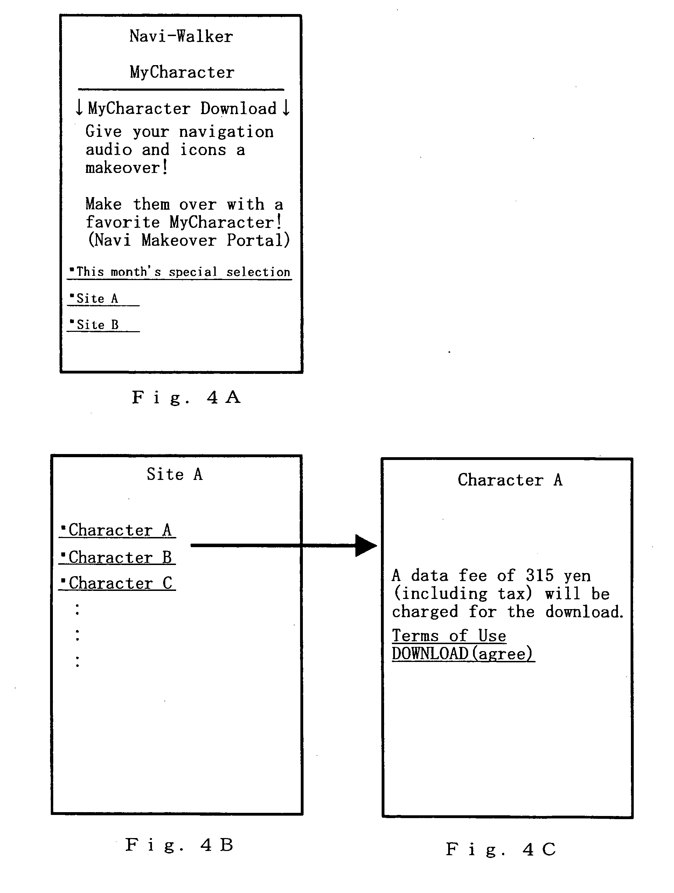

First of all in step S 10, the mobile terminal 20 connects to the information distribution server 40 and opens the page for rewrite data (menu of audio data for audio guidance (content menu)). At this point the mobile terminal 20 is still linked to the information distribution server 40. Fig. 4 illustrates examples of content menu screens, Fig. 4A being an initial screen that presents sites which provide content, Fig. 4B being a detail screen showing the content list of a site selected on the initial screen, and Fig. 4C being a screen that presents the fee and content use license conditions, applicable if the selected content is downloaded.

On the initial screen in Fig. 4A, the user of the mobile terminal 20 selects a site to provide content. If for example the user selects site A, then in step S11 a link will be established with a content server, for example content server 50, that will provide the content at site A, and a content list - the detail screen of Fig. 4B - will be presented. In the content list there are listed characters, artists or the like for whom audio data is provided, in the manner shown in Fig. 4B. When the user selects the content that the user wishes to download from this content list, the presentation screen shown in Fig. 4C is displayed on the mobile terminal 20, for the user to verify the fee, use period and other use license conditions. Such link processing is effected by the content menu processing unit 45 of the information distribution server 40 referencing the content link destination DB 47 and linking to the URL of the site selected by the mobile terminal 20.

If the user verifies and accepts the conditions, a settlement request is issued from the charging processing unit 51 of the content server 50 to the charging server 60 in step S12. This settlement server is a server contracted by the content providing company, and is freely determined by the company. For this settlement server, the fee collection system of the mobile telephone company could be used, or a settlement contract could be concluded independently with a credit card company or a bank. When the settlement processing unit 61 in the charging server 60 completes settlement, a notification of settlement approval is sent to the content server 50 in step S13.

When the content server 50 receives the notification of settlement approval from the settlement server 60, in step S14 the link returns to the information distribution server 40, and as previously described, a download page for the selected content is displayed. Then in step S15 the download URL for the selected content is communicated.

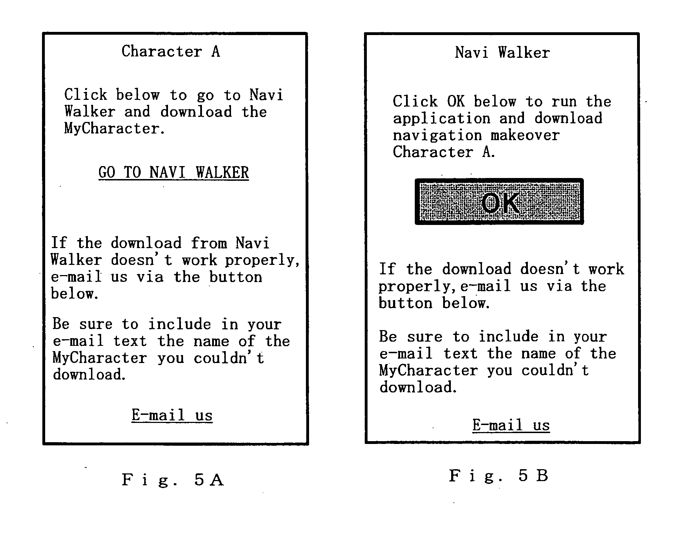

Fig. 5 illustrates examples of download page screens provided by the information distribution server 40, Fig. 5A being an initial screen and Fig. 5B being a download screen that links to the download URL for the selected content. When, in step S16, the user of the mobile terminal 20 executes (clicks) final confirmation (OK) of the download on the download screen of Fig. 5B, a download request is issued to the specified URL, and in step S17 the selected content data is downloaded to the mobile terminal 20. The URL that could be linked to at this stage is not limited to those of the content server 50; a URL from a content server 30 routed via the Internet 14, or the like, could be equally well linked to. When downloading of the content data is finished, the link returns from the information distribution server 40 to an interior page of the mobile terminal 20 in step S18 and the operation ends.

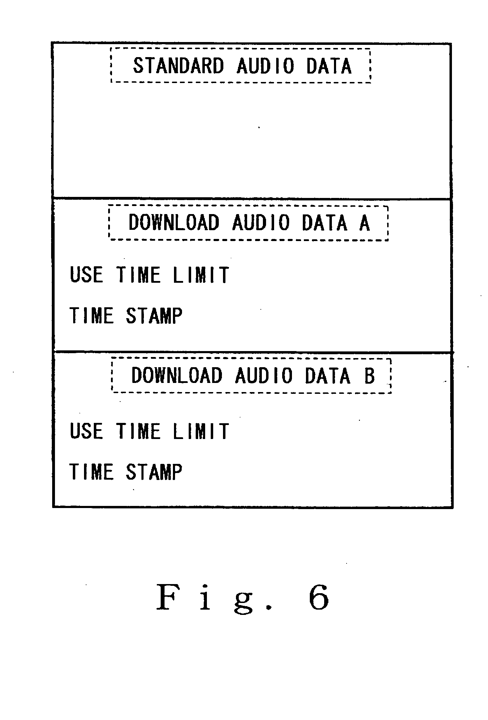

When content selected by the user is downloaded from the content server 50 to the mobile terminal 20, the downloaded content data is stored in the content storage unit 24 in the mobile terminal 20. As shown in Fig. 6, in the content storage unit 24 there is unrewritable pre-installed audio data (standard audio data), and besides that there can also be stored, for example, two sets of audio data (download audio data A, download audio data B). The user can rewrite these two audio data sets into any selected audio data (downloaded content data) for utilization.

A time period (period for which utilization by the user is permitted) determined by the content provider is recorded in the download audio data A and download audio data B or the like. For instance, where utilization for 90 days after downloading is permitted, the use period that is recorded will be 90 days. Upon downloading and storing the audio data, the mobile terminal 20 applies a time stamp to the file for the audio data, as shown in Fig. 6. This time stamp uses the system clock of the communication type information distribution system 10, so that the correct time routed via a WAP gateway is used. Even if the user turns off the auto correction of the mobile terminal 20 and sets the date/time manually, that clock's time will be irrelevant.

Checks of the use period are run with, for example, the following timing in the navigation system:
(1) when the navigation application is started up,
(2) when the GPS processing unit 26 carries out position fixing,
(3) when the demo mode is executed,
(4) when HELP is consulted,
(5) when audio data is switched (selected).
If comparison of the time stamp with the current time shows that the use period has expired, a pop-up screen to that effect is displayed. When the limit is passed, it is simply a matter of using the standard audio data.

### [Industrial Applicability]

As the foregoing has described, according to the communication type information distribution system of the present embodiment of the invention illustrated in Figs. 1 and 2, even though the service provider for the information distribution server 40 and the provider of the content (for the content server 50) are distinct, content can be provided to the mobile terminal without giving any inconvenience to the user. Moreover, the content provider can charge fees reliably via an independent charging route. Also, the service provider for the information distribution server 40 can keep logs of the downloads, and hence can collect fees for utilization of the information distribution service system from the content provider. Apart from making the format of the files provided accord with the system, there is a high degree of freedom for the service provider, and consequently the participation of a wide variety of providers can be expected. Furthermore, the content data provided can be not only audio data but also data to accompany changes in displayed characters.

Furthermore, the service provider for the information distribution server 40 may carry out provision of content, and may in addition carry out fee-charging independently, in which case the information distribution server 40 may be so structured as to possess in integrated form the functions of the content server 50 and the charging server 60.

## Claims

1. A communication type information distribution system which rewrites selectively used content at a mobile terminal, comprising:
an information distribution server that provides a content menu;
at least one content server that provides content data including a use period during which utilization of said content is allowed; and
a charging server that carries out settlement processing with regard to a request for downloading of content data;
said information distribution server including: a content menu processing unit that provides a content menu to a mobile terminal; a download control unit; and a content link destination database (DB); and links the mobile terminal to said content server by referencing said content link destination DB in accordance with a content specification from said mobile terminal;
said content server including a charging processing unit that requests settlement processing from said charging server with regard to a request for downloading of said specified content, and distributes download information to said information distribution server in accordance with settlement approval from said charging server;
said information distribution server including a download control unit linking said mobile terminal to the download URL of said content server to enable said specified content data to be downloaded, and
said mobile terminal applying to said downloaded content data a time stamp based on a system clock and controlling a period for utilization by comparing said system clock's current time and said time stamp.

2. The communication type information distribution system according to claim 1, wherein any two of said information distribution server, content server and charging server are configured as an integrated server.

3. The communication type information distribution system according to claim 1 or claim 2, wherein said mobile terminal possesses a global positioning system (GPS) processing unit and a navigation request unit, and said information distribution server further possesses a map DB and a route search unit and distributes map data together with data on a guidance route found via said route search unit in response to a navigation request from said mobile terminal.

4. The communication type information distribution system according to claim 1 or claim 2, wherein said mobile terminal possesses a GPS processing unit and a navigation request unit, said information distribution server further possesses a map DB and a route search unit and distributes map data together with data on a guidance route found via said route search unit in response to a navigation request from said mobile terminal, and said content data is audio data for guiding along said guidance route.

5. An information distribution server constituting a component of a communication type information distribution system which rewrites selectively used content at a mobile terminal and includes said information distribution server that provides a content menu; at least one content server that provides content data including a use period during which utilization of said content is allowed; and a charging server that carries out charging processing with regard to a request for downloading of content data;
said information distribution server comprising:
a content menu processing unit that provides a content menu to a mobile terminal;
a content link destination database (DB); and
a download control unit that links said mobile terminal to the download URL of said content server to enable said specified content data to be downloaded;
said information distribution server linking said mobile terminal to said content server by referencing said content link destination DB in accordance with the content specification from said mobile terminal, and linking said mobile terminal, by means of said download control unit, to the download URL of said content server to enable said specified content data to be downloaded.

6. The information distribution server according to claim 5, wherein:
said information distribution server is a component of a communication type information distribution system which rewrites selectively used content at a mobile terminal possessing a global positioning system (GPS) processing unit and a navigation request unit and which comprises: said information distribution server that provides a content menu; at least one content server that provides content data including a use period during which utilization of said content is allowed; and a charging server that carries out charging processing with regard to a request for downloading of content data;
said information distribution server possesses a map DB and a route search unit and distributes map data together with data on a guidance route found via said route search unit in response to a navigation request from said mobile terminal.

7. The information distribution server according to claim 5, wherein:
said information distribution server is a component of a communication type information distribution system which rewrites selectively used content at a mobile terminal possessing a GPS processing unit and a navigation request unit, and which comprises: said information distribution server that provides a content menu; at least one content server that provides content data including a use period during which utilization of said content is allowed; and a charging server that carries out charging processing with regard to a request for downloading of content data;
said information distribution server possesses a map DB and a route search unit and distributes map data together with data on a guidance route found via said route search unit in response to a navigation request from said mobile terminal, and said content data is audio data for guiding along said guidance route.

8. The information distribution server according to any one of claims 5 to 7, wherein said information distribution server is integrated with said content server and/or charging server.

9. A program that enables a computer constituting an information distribution server, said information distribution server being a component of a communication type information distribution system which comprises: said information distribution server that provides a content menu, at least one content server that provides content data including a use period during which utilization of a content is allowed, and a charging server that carries out charging processing with regard to a request for downloading of content data; and which rewrites a selectively used content at a mobile terminal; and said information distribution server including: a content menu processing unit that provides a content menu to said mobile terminal, a content link destination database (DB), and a download control unit that links said mobile terminal to a download URL of said content server to enable said specified content data to be downloaded; to execute the following processes:
linking to a content server by referencing said content link destination DB in accordance with a content specification from said mobile terminal; and
enabling, by means of said download control unit, specified content data to be downloaded from said content server to said mobile terminal.

10. A program that enables a computer constituting an information distribution server, said information distribution server being a component of a communication type information distribution system which comprises: said information distribution server that provides a content menu, at least one content server that provides content data including a use period during which utilization of a content is allowed, and a charging server that carries out charging processing with regard to a request for downloading of content data; and which rewrites a selectively used content at a mobile terminal possessing a global positioning system (GPS) processing unit and a navigation request unit; and said information distribution server including: a content menu processing unit that provides a content menu to said mobile terminal, a content link destination database (DB), a download control unit that links said mobile terminal to a download URL of said content server to enable said specified content data to be downloaded, a map database, and a route search unit; to execute the following processes:
linking to a content server by referencing said content link destination DB in accordance with a content specification from said mobile terminal;
enabling, by means of said download control unit, specified content data to be downloaded from said content server to said mobile terminal;
searching for a route in response to a navigation request from said mobile terminal; and
distributing map data together with data on a guidance route found via said route search unit.
